# EUROPEAN PATENT APPLICATION

(11) **EP 2 939 884 A1**
(43) Date of publication of application: **04.11.2015**
(21) Application number: 14745991.1
(22) Date of filing: 28.01.2014
(51) Int. Cl.: B60R 16/02, B60R 11/02, G01C 21/36

(54) **DISPLAY CONTROL DEVICE**

(30) Priority: 30.01.2013 JP 2013015404
(71) Applicant: Yazaki Corporation, Minato-ku Tokyo 108-8333 (JP)
(72) Inventor: MIZUNO Yoshiyuki, Makinohara-shi Shizuoka 421-0492 (JP)
(74) Representative: Brevalex
(86) International application number: PCT/JP2014/051867
(87) International publication number: WO 2014/119584

(57) **Abstract**

A direction detection portion (4) is attached to a lever switch (3) that is attached to a steering column. The direction detection portion detects in a discriminable manner operations of the lever switch (3) in a rotation direction along an outer circumference of a steering (7), in a circumferential direction around the axis of the lever switch, in an axial direction of the lever switch and in a forward-backward direction of the steering. A display portion (5) displays image information. A control portion (6) controls display of the display portion (5) and moves the image information displayed on the display portion (5) in a direction according to an operation direction of the lever switch (3) detected by the direction detection portion (4).

## Description

### Technical Field

The present invention relates to display control devices, and in particular to a display control device which controls a display portion mounted in a vehicle.

### Background Art

In recent years, a large number of electronic devices, such as an audio device, a TV, a video device, and a mobile phone, including a car navigation system, are mounted in an automobile. It has been proposed to provide a plurality of lever switches in the vicinity of the steering of a vehicle, in order to operate these electronic devices (patent literatures 1 to 3). Although a driver is placed in a state of being always required to grip the steering (handle) by the hands during the driving, the diver can quickly and naturally perform an operation using the lever switches from this situation.

### Citation List

### Patent Literature

Patent Literature 1: Japanese Patent Publication No. H10-274541
Patent Literature 2: Japanese Patent Publication No. 2006-205771
Patent Literature 3: Japanese Patent Publication No. 2012-137866

### Summary of Invention

### Technical Problem

Further, functions used or wanted to be used while a driver drives a vehicle tends to increase. In general, at the time of using each of these functions, information for feeding back to (or notifying) a driver that the each function is operated/stopped/switched according to an instruction (= each switch operation) from the driver is displayed on a vehicle-mounted display (including a meter). However, at present, such the feedback is performed as a simple display expression. Thus, there arises a problem that a driver cannot get a sense of unity between the operation feeling and the feedback and hence cannot get a sense of satisfaction in the operation.

The invention has been contrived bearing in mind the heretofore described circumstances, and an object of the invention is to provide a display control device which can provide a sense of satisfaction in an operation even in a case of performing the operation of moving a hand or a finger with the hands remaining placed on a steering.

### Solution to Problem

In order to solve the heretofore described problem, one aspect (1) of the invention is such that a display control device includes a lever switch which is attached to a steering column, a direction detection portion which detects an operation direction of the lever switch, a display portion which displays image information, and a display control portion which controls display of the display portion, wherein the display control portion moves the image information displayed on the display portion in a direction according to a direction detected by the direction detection portion.

Another aspect (2) of the invention is such that a display control device includes a lever switch which is attached to a steering column, a direction detection portion which is attached to the lever switch and detects a moving direction of a finger or a hand, a display portion which displays image information, and a display control portion which controls display of the display portion, wherein the display control portion moves the image information displayed on the display portion to a direction according to a direction detected by the direction detection portion.

Still another aspect (3) of the invention is such that the direction detected by the direction detection portion is at least one of a rotation direction along an outer circumference of the steering, a circumferential direction around an axis of the lever switch, an axial direction of the lever switch or a forward-backward direction of the steering.

Still another aspect (4) of the invention is such that when the direction detection portion detects the rotation direction along the outer circumference of the steering, the display control portion moves the image information displayed on the display portion along the rotation direction.

Still another aspect (5) of the invention is such that when the direction detection portion detects the axial direction of the steering, the display control portion moves the image information displayed on the display portion along a left-right direction.

Still another aspect (6) of the invention is such that when the direction detection portion detects the direction, the display control portion moves the image information displayed on the display portion in a direction according to the detected direction to make the image information disappear from a display area of the display portion, and also moves new image information in the direction according to the detected direction to make the new image information appear on the display area of the display portion, thereby switching the image information.

As described above, according to the invention of the aspects (1) and (2), the display control portion moves the image information displayed on the display portion in a direction according to the detected direction of the direction detection portion. Thus, even in a case of performing an operation of moving a hand or a finger with the hands remaining placed on the steering, a sense of unity between the operation feeling (motion) and the feedback (movement of the image information) can be obtained and hence a sense of satisfaction in the operation can be gotten.

Further, according to the invention of the aspects (3) to (6), a sense of unity between the operation feeling (motion) and the feedback (movement of the image information) can be further obtained and hence a sense of satisfaction in the operation can be further gotten.

### Advantageous Effects of Invention

According to the invention, the display control device, which can obtain a sense of satisfaction in an operation even in a case of performing the operation of moving a hand or a finger with the hands remaining placed on the steering, can be provided.

### Brief Description of Drawings

[Fig. 1] Fig. 1 is a diagram showing an embodiment of a display control device according to the invention.
[Fig. 2] Fig. 2 is a side view of an area around a steering shown in Fig. 1.
[Fig. 3] Fig. 3 is an enlarged diagram of a lever switch shown in Fig. 1.
[Fig. 4] Fig. 4 is a diagram showing a relation between the lever switch and movements of a finger.
[Fig. 5] Fig. 5 is a diagram showing a relation between the lever switch and a movement of a finger.
[Fig. 6] Fig. 6 is a flowchart showing a processing procedure of a control portion shown in Fig. 1.
[Fig. 7] Fig. 7 is a diagram showing a display portion shown in Fig. 1 and an example of image information displayed on the display portion.
[Fig. 8] Fig. 8 is a diagram showing the display portion shown in Fig. 1 and an example of the image information displayed on the display portion.
[Fig. 9] Fig. 9 is a diagram showing the display portion shown in Fig. 1 and an example of the image information displayed on the display portion.
[Fig. 10] Fig. 10 is a diagram showing the display portion shown in Fig. 1 and an example of the image information displayed on the display portion.

### Description of Embodiments

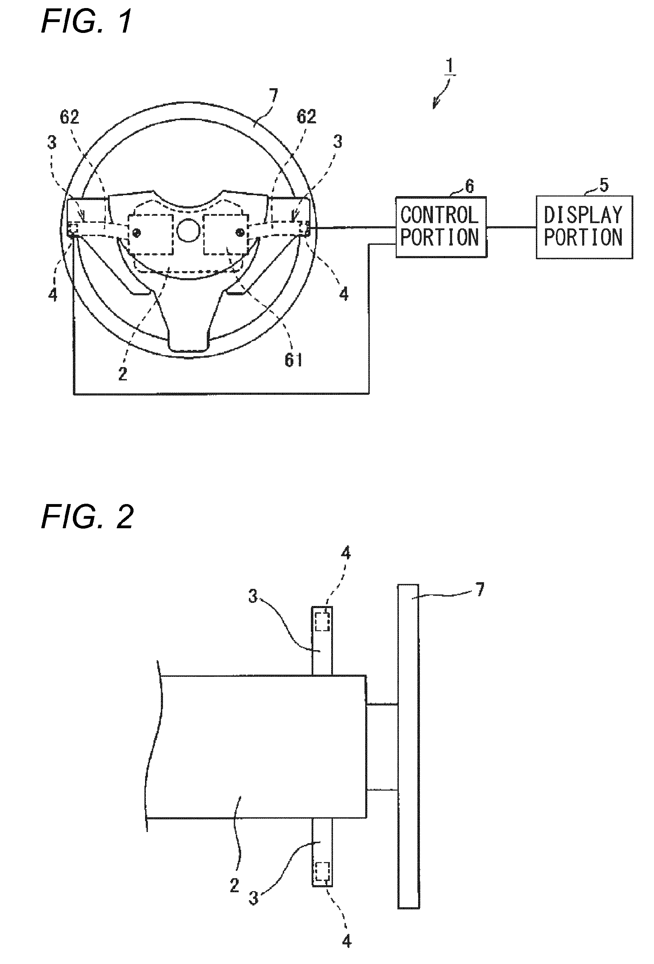

Hereinafter, an embodiment of a display control device according to the invention will be explained with reference to Figs. 1 and 2. As shown in these drawings, a display control device 1 includes lever switches 3 attached to a steering column 2, direction detection portions 4 each of which is attached to corresponding one of the lever switches 3 and detects an operation direction of the corresponding lever switch 3, a display portion 5 which displays image information, and a control portion 6 which serves as a display control portion for controlling display of the display portion 5.

The lever switches 3 are provided so as to protrude left and right from the side surfaces of the steering column 2 acting as the rotating shaft of a steering 7.

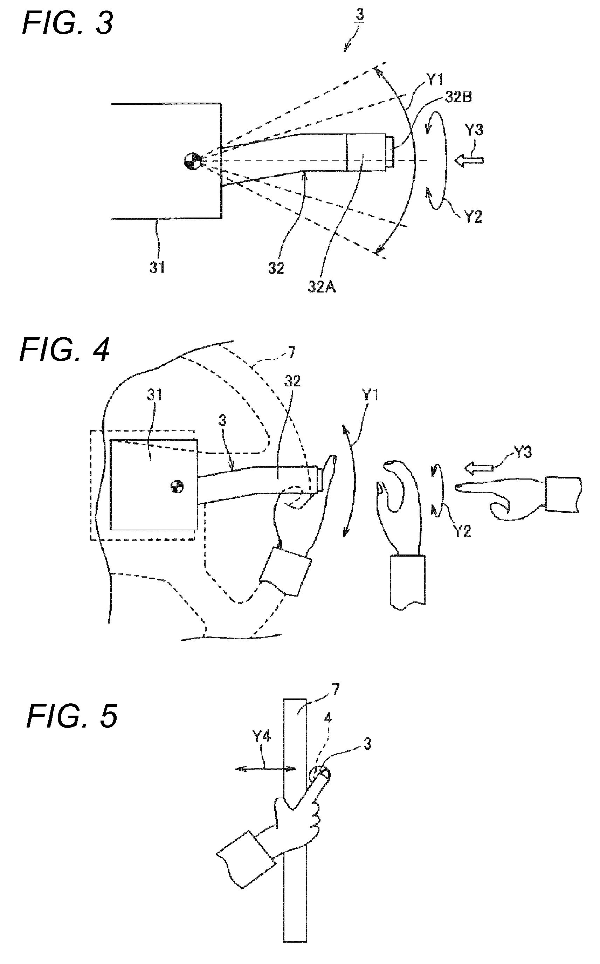

As shown in Fig. 3, the lever switch 3 has a base portion 31 and a lever body 32, one end of which is attached to the base portion 31. In general, the lever switch 3 has a structure wherein it is possible to perform, for example, an operation of turning the lever body 32 in a rotation direction Y1 along the outer circumference of the steering 7 with respect to the base portion 31 as a fulcrum or in a forward-backward direction Y4 (left-right direction in Fig. 5) of the steering 7, an operation of rotating a nob 32A attached to the lever body 32 in a circumferential direction Y2 around the axis of the lever switch 3, and an operation of pushing a button 32B provided at the leading end of the lever body 32 in an axial direction Y3 of the lever switch 3. Incidentally, although each of Figs. 3 and 5 shows the lever switch 3 protruded from the right side surface of the steering column 2, the lever switch 3 protruded from the left side surface of the steering column is merely inverted horizontally and has the same configuration.

As shown in Fig. 4, the leading end of the lever switch 3 is provided in the vicinity of the outer periphery of the steering 7. Because of this, with the hands remaining placed on the steering 7, the leading end of the lever switch 3 can be operated. Thus, the lever switch 3 can be operated in substantially the same condition as that when gripping the steering 7.

The direction detection portion 4 is configured of, for example, a detection switch which is turned on/off according to an operation of the lever switch 3. The direction detection portion is provided at the lever switch 3. The direction detection portion 4 detects in a discriminable manner the operations of the lever switch 3 in the rotation direction Y1 of the lever switch 3, the circumferential direction Y2 around the axis of the lever switch 3, the axial direction Y3 (left direction in Fig. 4) of the lever switch 3 and the forward-backward direction Y4 (see Fig. 5) of the steering 7.

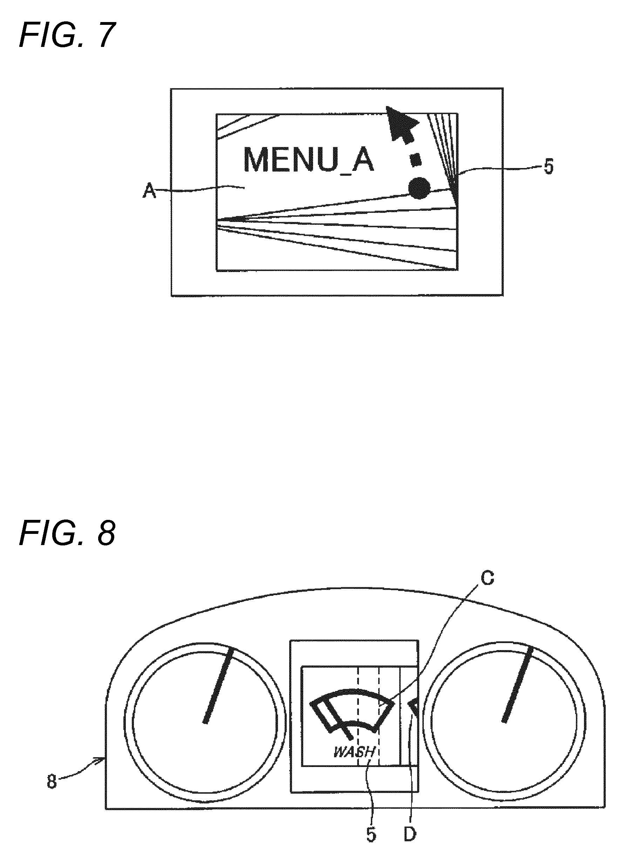

The display portion 5 is configured of a display such as a liquid crystal display portion. The display portion 5 is provided within a console panel of a vehicle or a combination meter 8 provided at an instrument panel of the vehicle as shown in Fig. 8. Various kinds of information of the vehicle is displayed on the display portion as an image visually recognizable by a driver or passengers. The various kinds of information is called image information in this case. The image information contains image data, character data and so on.

The control portion 6 is configured of, for example, a microcomputer. The control portion is connected to the display portion 5 and not-shown electronic devices such as an air conditioner and a not-shown navigation device, thereby performing display control of the display portion 5 and control of the electronic devices. The control portion 6 controls display of the display portion 5 according to a detected direction of the direction detection portion 4.

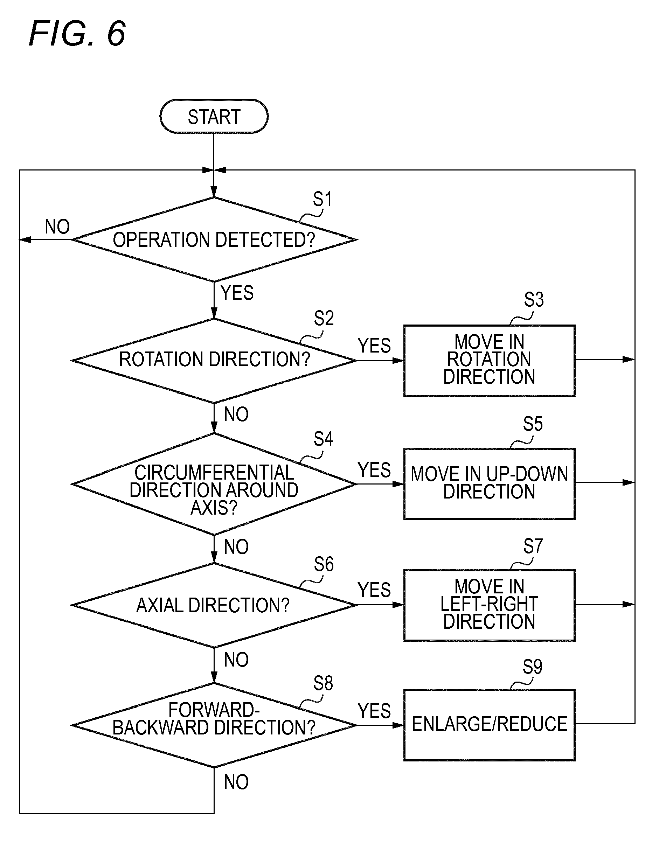

Next, an operation of the display control device 1 described above will be explained with reference to Fig. 6. Firstly, the control portion 6 starts a processing in response to a turn-on of an ignition switch, and determines whether or not an operation of the lever switch 3 is detected by the direction detection portion 4 (step S1). When it is determined that an operation of the lever switch 3 is detected (Y in step S1), if the detected direction (= operation direction of the lever switch 3) is the rotation direction Y1 along the outer circumference of the steering 7 (Y in step S2), the control portion 6 moves the image information displayed on the display portion 5 in the rotation direction Y1 (step S3) and processing is returned to step S1.

An example of the operation of the control portion 6 in step S3 will be explained with reference to Fig. 7. As shown in this drawing, it is supposed that, for example, a menu image A is displayed on the display portion 5. In this state, when a driver moves the lever switch 3 counterclockwise in the rotation direction Y1 along the outer circumference of the steering 7, the direction detection portion 4 detects the counterclockwise operation in the rotation direction Y1. When this counterclockwise operation in the rotation direction Y1 is detected, as shown in Fig. 7, the control portion 6 moves the menu image A displayed on the display portion 5 counterclockwise in the rotation direction Y1 to make this image disappear from the display area of the display portion 5. Simultaneously, the control portion moves a new menu image B (not shown) counterclockwise in the rotation direction Y1 to make this image appear on the display area of the display portion 5, thereby switching from the menu image A to the menu image B.

Further, when a driver operates the lever switch 3 clockwise in the rotation direction Y1 along the outer circumference of the steering 7 in a state that the menu image B is displayed on the display portion 5, the direction detection portion 4 detects this operation. Then, the control portion 6 moves the menu image B displayed on the display portion 5 clockwise in the rotation direction Y1 to make this image disappear from the display area of the display portion 5. Simultaneously, the control portion moves a new menu image A clockwise in the rotation direction Y1 to make this image appear on the display area of the display portion 5, thereby switching from the menu image B to the menu image A.

Further, when the detected direction of the direction detection portion 4 is the circumferential direction Y2 around the axis (rotation direction of the knob 32A) (Y in step S4), the control portion 6 moves the image information displayed on the display portion 5 along an up-down direction (step S5) and processing is returned to step S1.

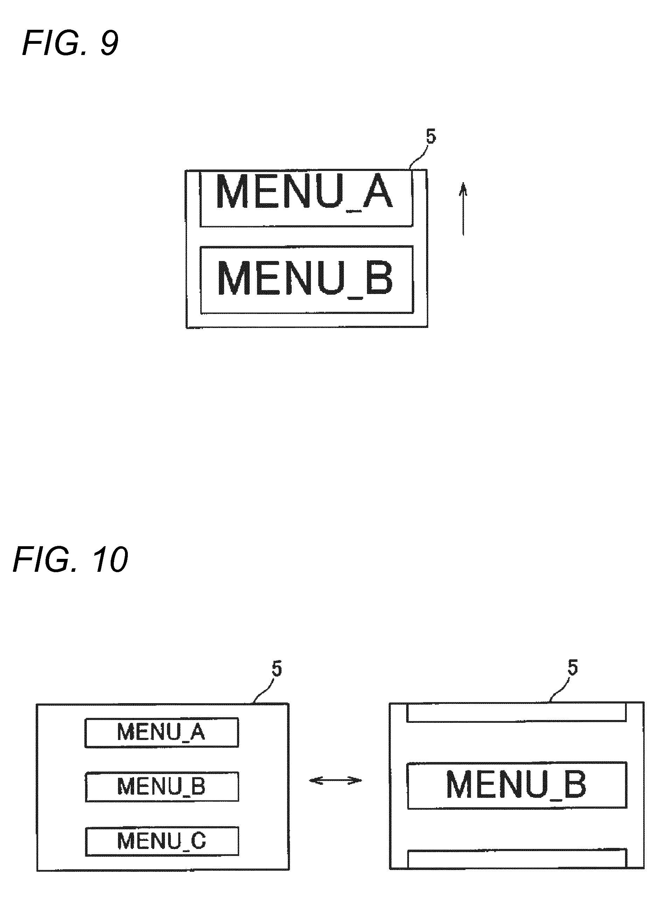

An example of the operation of the control portion 6 in step S5 will be explained with reference to Fig. 9. As shown in this drawing, it is supposed that, for example, the menu image A is displayed on the display portion 5. In this state, when a driver moves the knob 32A of the lever switch 3 upward in the circumferential direction Y2 around the axis, the direction detection portion 4 detects the upward operation in the circumferential direction Y2 around the axis. When this upward operation in the circumferential direction Y2 around the axis is detected, as shown in Fig. 9, the control portion 6 moves the menu image A displayed on the display portion 5 upward to make this image disappear from the display area of the display portion 5. Simultaneously, the control portion moves a new menu image B upward to appear this image on the display area of the display portion 5, thereby switching from the menu image A to the menu image B.

Further, when a driver operates the knob 32A of the lever switch 3 downward in the circumferential direction Y2 around the axis of the lever switch 3 in a state that the menu image B is displayed on the display portion 5, the direction detection portion 4 detects this operation. Then, the control portion 6 moves the menu image B displayed on the display portion 5 downward to make this image disappear from the display area of the display portion 5. Simultaneously, the control portion moves a new menu image A downward to make this image appear on the display area of the display portion 5, thereby switching from the menu image B to the menu image A.

Further, when the detected direction of the direction detection portion 4 is the axial direction Y3 (operation direction of the button 32B) (Y in step S6), the control portion 6 moves the image information displayed on the display portion 5 along the left-right direction (step S7) and processing is returned to step S1.

An example of the operation of the control portion 6 in step S7 will be explained with reference to Fig. 8. As shown in this drawing, it is supposed that, for example, a meter image is displayed on the display portion 5. In this state, when a driver pushes the button 32B of the lever switch 3 protruding from the right side surface of the steering column 2, toward the left along the axial direction Y3, the direction detection portion 4 detects this operation toward the left along the axial direction Y3. When this operation toward the left along the axial direction Y3 is detected, as shown in Fig. 8, the control portion 6 moves a WASH image C displayed on the display portion 5 toward the left to make this image disappear from the display area of the display portion 5. Simultaneously, the control portion moves a new image D toward the left to make this image appear on the display area of the display portion 5, thereby switching from the WASH image C to the image D.

Further, when a driver pushes the button 32B of the lever switch 3 protruding from the left side surface of the steering column 2, toward the right along the axial direction Y3 in a state that the image D is displayed on the display portion 5, the direction detection portion 4 detects this operation toward the right along the axial direction Y3. When this operation toward the right along the axial direction Y3 is detected, the control portion 6 moves the image D displayed on the display portion 5 toward the right to make this image disappear from the display area of the display portion 5. Simultaneously, the control portion moves a new WASH image C toward the right to make this image appear on the display area of the display portion 5, thereby switching from the image D to the WASH image C.

Further, when the detected direction of the direction detection portion 4 is the forward-backward direction Y4 (Y in step S8), the control portion 6 moves the image information displayed on the display portion 5 along the forward-backward direction Y4, that is, enlarges/reduces the image information (step S9), and processing is returned to step S1.

An example of the operation of the control portion 6 in step S9 will be explained with reference to Fig. 10. As shown in this drawing, it is supposed that, for example, a plurality of menu images A to C are displayed on the display portion 5 in a manner that the menu image B is located at the center. In this state, when a driver operates the lever switch 3 so as to move forward along the forward-backward direction Y4, the direction detection portion 4 detects the forward operation along the forward-backward direction Y4. When this forward operation along the forward-backward direction Y4 is detected, as shown in Fig. 10, the control portion 6 enlarges the menu image B located at the center on the display portion 5 as if this image is moved forward along the forward-backward direction Y4. Simultaneously, the control portion eliminates the menu images A and C from the display area of the display portion 5.

Further, when a driver operates the lever switch 3 so as to move backward along the forward-backward direction Y4 in a state that the menu image B is displayed in an enlarged manner on the display portion 5, the direction detection portion 4 detects this operation. Then, as shown in Fig. 10, the control portion 6 reduces the menu image B displayed on the display portion 5 as if this image is moved backward along the forward-backward direction Y4 and simultaneously makes the menu images A and C appear on the display portion 5.

When the detected direction of the direction detection portion 4 is not the rotation direction Y1, the circumferential direction Y2 around the axis, the axial direction Y3 or the forward-backward direction Y4 (N in step S8), processing is returned to step S1 again.

According to the previously described embodiment, the control portion 6 moves, according to the operation direction of the lever switch 3 detected by the direction detection portion 4, the image information displayed on the display portion 5 to the same direction. Thus, even in a case of performing an operation of moving a hand or a finger with the hands remaining placed on the steering 7, a sense of unity between the operation feeling (motion) and the feedback (movement of the image information) can be obtained and hence a sense of satisfaction in the operation can be gotten.

Further, according to the previously described embodiment, when the direction detection portion 4 detects the operation of the lever switch 3, the control portion 6 moves the image information displayed on the display portion 5 to the same direction as the detected direction of the direction detection portion 4 to make this image disappear from the display area of the display portion 5. Simultaneously, the control portion moves new image information to the same direction as the detected direction to make this image information appear on the display area of the display portion 5, thereby switching the image information. By so doing, a sense of unity between the operation feeling (motion) and the feedback (movement of the image information) can be further obtained and hence a sense of satisfaction in the operation can be further gotten.

Further, according to the previously described embodiment, when the operation of the lever switch 3 in the rotation direction Y1 along the outer circumference of the steering 7 is detected, the control portion 6 moves the image information displayed on the display portion 5 along the rotation direction Y1. Further, when the operation of the lever switch 3 in the axial direction Y3 is detected, the control portion 6 moves the image information displayed on the display portion 5 to the left or right direction. By so doing, a sense of satisfaction in the operation can be furthermore gotten.

Incidentally, according to the previously described embodiment, the direction detection portion 4 detects the operation direction of the lever switch 3 as the detected direction, but the invention is not limited thereto. For example, a camera, an electrostatic sensor, or the like may be used as the direction detection portion 4 to thereby detect a moving direction of a finger or a hand in the vicinity of the lever switch 3 as the detected direction.

That is, the direction detection portion 4 detects in a discriminable manner a movement in the rotation direction Y1 along the outer circumference of the steering 7, a movement in the circumferential direction Y4 around the axis of the lever switch 3, a movement in the axial direction Y3 of the lever switch 3 (that is, movement in the direction approaching or separating from the leading end of the lever switch 3), and a movement in the forward-backward direction Y4 of the steering 7. Each of these movements is substantially same as the operations of the lever switch 3 as described above, and hence a driver can perform these movements without feeling a sense of incongruity. Thus, like the previously described embodiment, a sense of satisfaction in the operation can be furthermore gotten.

Incidentally, according to the previously described embodiment, the direction detection portion 4 detects the operation in the rotation direction Y1 along the outer circumference of the steering 7, the operation in the circumferential direction Y2 around the axis of the lever switch 3, the operation in the axial direction Y3 of the lever switch 3 and the operation in the forward-backward direction Y4 of the steering 7, but the invention is not limited thereto. At least of one of these directions may be detected. Further, another direction may be detected.

According to the previously described embodiment, the menu image or the like is switched, but the invention is not limited thereto. The image may be switched to another image. Further, the image information to be switched is not limited to an image but may be characters.

According to the previously described embodiment, the image information displayed on the display portion 5 is switched according to the operation of the lever switch 3 or the movement of a finger or a hand, but the invention is not limited thereto. For example, the image information displayed on the display portion 5 may be scrolled in the detected direction of the direction detection portion 4.

The previously described embodiment merely shows the representative example of the invention and the invention is not limited to this embodiment. That is, the embodiment can be modified in various manners within a range not departing from the gist of the invention.

Herein the features of the previously described embodiment of the display control device according to the invention will be briefly summarized and listed below in [1] to [6].

[1] A display control device which includes:
   a lever switch (3) which is attached to a steering column (2);
   a direction detection portion (4) which detects an operation direction of the lever switch;
   a display portion (5) which displays image information; and
   a display control portion (control portion 6) which controls display of the display portion, wherein
   the display control portion moves the image information (menu image A, WASH image C) displayed on the display portion in a direction according to a direction detected by the direction detection portion.
[2] A display control device which includes:
   a lever switch (3) which is attached to a steering column (2);
   a direction detection portion (4) which is attached to the lever switch (3) and detects a moving direction of a finger or a hand;
   a display portion (5) which displays image information; and
   a display control portion (control portion 6) which controls display of the display portion, wherein
   the display control portion moves the image information (menu image A, WASH image C) displayed on the display portion to a direction according to a direction detected by the direction detection portion.
[3] The display control device according to [1] or [2], wherein the direction detected by the direction detection portion is at least one of a rotation direction (Y1) along an outer circumference of the steering, a circumferential direction (Y2) around an axis of the lever switch, an axial direction (Y3) of the lever switch or a forward-backward direction (Y4) of the steering.
[4] The display control device according to one of [1] to [3], wherein when the direction detection portion detects the rotation direction along the outer circumference of the steering, the display control portion moves the image information displayed on the display portion along the rotation direction.
[5] The display control device according to one of [1] to [4], wherein when the direction detection portion detects the axial direction of the steering, the display control portion moves the image information displayed on the display portion along a left-right direction.
[6] The display control device according to one of [1] to [5], wherein when the direction detection portion detects the direction, the display control portion moves the image information (menu image A, WASH image C) displayed on the display portion in a direction according to the detected direction to make the image information disappear from a display area of the display portion, and also moves new image information (menu image B, image D) in the direction according to the detected direction to make the new image information appear on the display area of the display portion, thereby switching the image information.

A detailed description has been given of the invention referring to the specific embodiment, but it will be understood by those skilled in the art that various changes and modifications can be made without departing from the spirit and scope of the invention.

The present application is based on Japanese Patent Application (Japanese Patent Application No. 2013-15404) filed on January 30, 2013, the contents of which are incorporated herein by reference.

### Industrial Applicability

According to the invention, even in a case of performing an operation of moving a hand or a finger with the hands remaining placed on the steering, a sense of unity between the operation feeling (motion) and the feedback (movement of the image information) can be obtained and hence a sense of satisfaction in the operation can be gotten. The invention which produces this advantageous effect is useful in fields relating to a display control device which controls a display portion mounted in a vehicle.

### Reference Signs List

- 1: display control device
- 2: steering column
- 3: lever switch
- 4: direction detection portion
- 5: display portion
- 6: control portion (display control portion)
- 7: steering
- Y1: rotation direction
- Y2: circumferential direction around axis
- Y3: axial direction
- Y4: forward-backward direction

## Claims

1. A display control device comprising:
a lever switch which is attached to a steering column;
a direction detection portion which detects an operation direction of the lever switch;
a display portion which displays image information; and
a display control portion which controls display of the display portion;
wherein the display control portion moves the image information displayed on the display portion in a direction according to a direction detected by the direction detection portion.

2. A display control device, comprising:
a lever switch which is attached to a steering column;
a direction detection portion which is attached to the lever switch and detects a moving direction of a finger or a hand;
a display portion which displays image information; and
a display control portion which controls display of the display portion,
wherein the display control portion moves the image information displayed on the display portion to a direction according to a direction detected by the direction detection portion.

3. The display control device according to Claim 1 or 2, wherein
the direction detected by the direction detection portion is at least one of a rotation direction along an outer circumference of the steering, a circumferential direction around an axis of the lever switch, an axial direction of the lever switch or a forward-backward direction of the steering.

4. The display control device according to any one of Claims 1 to 3, wherein
when the direction detection portion detects the rotation direction along the outer circumference of the steering, the display control portion moves the image information displayed on the display portion along the rotation direction.

5. The display control device according to any one of Claims 1 to 4, wherein
when the direction detection portion detects the axial direction of the steering, the display control portion moves the image information displayed on the display portion along a left-right direction.

6. The display control device according to any one of Claim 1 to 5, wherein
when the direction detection portion detects the direction, the display control portion moves the image information displayed on the display portion in a direction according to the detected direction to make the image information disappear from a display area of the display portion, and also moves new image information in the direction according to the detected direction to make the new image information appear on the display area of the display portion, thereby switching the image information.
